(19) **Europäisches Patentamt / European Patent Office / Office européen des brevets**

(11) **EP 1 147 809 B1**

(12) **FASCICULE DE BREVET EUROPEEN**

(45) Date de publication et mention
de la délivrance du brevet:
**16.06.2010 Bulletin 2010/24**

(51) Int Cl.:
***B01J 8/02*** *(2006.01)* ***B01J 8/04*** *(2006.01)*

(21) Numéro de dépôt: **01400963.3**

(22) Date de dépôt: **13.04.2001**

(54) **Dispositif de distribution d'un mélange polyphasique sur un lit de solide granulaire comportant un élément brisejet poreux**

Vorrichtung, die einen Wasserstrahlregler enthält, zur Verteilung einer mehrphasigen Mischung über ein Festbett

Device incorporating an anti-splash element for distributing a multi-phase mixture on to a bed of solid granules

(84) Etats contractants désignés:
**DE ES IT NL**

(30) Priorité: **17.04.2000 FR 0005021**

(43) Date de publication de la demande:
**24.10.2001 Bulletin 2001/43**

(73) Titulaire: **Institut Français du Pétrole
92852 Rueil-Malmaison Cedex (FR)**

(72) Inventeurs:
  • **Harter, Isabelle
    69003 Lyon (FR)**
  • **Agoero, Robert
    38200 Vienne (FR)**

(56) Documents cités:
  **US-A- 3 431 084    US-A- 3 524 731
  US-A- 3 824 080    US-A- 4 140 625**

**Description**

La présente invention concerne un dispositif permettant d'optimiser la distribution d'un fluide comportant par exemple au moins une phase gazeuse comprenant le plus souvent au moins en partie de l'hydrogène et au moins une phase liquide à travers un lit de solides granulaires ou particules, les fluides étant en circulation sensiblement descendante à travers ledit lit de solides granulaires (ou particules solides). L'invention concerne également une enceinte comportant à proximité de son extrémité supérieure une entrée d'un premier fluide liquide et d'un deuxième fluide gazeux, contenant au moins un lit de solides granulaires et en dessus dudit lit un dispositif selon la présente invention tel que décrit ci-après

Ce dispositif peut être disposé :

- soit en tête de l'enceinte qui est le plus souvent un réacteur,

- soit en sortie d'un lit granulaire (alimentation sur toute la section de l'enceinte sur le lit granulaire suivant).

La présente invention trouve en particulier une application dans tous les cas :

- où la phase gazeuse est largement majoritaire par rapport à la phase liquide c'est-à-dire où le rapport volumique entre le gaz et le liquide est souvent supérieur à 3 : 1 et habituellement inférieur à

$$400 : 1 \ (3 < \frac{Gaz\ vol}{Liquide\ vol} < 400)$$

- où la réaction est fortement exothermique et nécessite l'introduction dans le réacteur d'un fluide, qui est souvent un gaz, supplémentaire pour refroidir le mélange gaz/liquide où la réaction nécessite un contact étroit pour permettre la dissolution d'un composé (par exemple de l'hydrogène $H_2$) dans la phase liquide.

La présente invention s'applique en particulier dans le domaine des distributeurs gaz/liquide comme par exemple ceux employés pour la mise en oeuvre des réactions d'hydrocraquage, d'hydrotraitement, d'hydrodésulfuration, d'hydrodéazotation, d'hydrogénations sélectives ou totales des coupes $C_2$ à $C_5$, l'hydrogénation sélective des essences de vapocraquage, l'hydrogénation des composés aromatiques dans des coupes aliphatiques et/ou naphténiques, l'hydrogénation des oléfines dans des coupes aromatiques.

Elle trouve aussi son application pour mettre en oeuvre d'autres réactions nécessitant un bon mélange d'une phase gazeuse et d'une phase liquide, par exemple les réactions d'oxydation partielle ou totale, les réactions d'amination, d'acétyloxydation, d'ammoxydation et d'halogénation en particulier de chloration.

Dans le domaine spécifique des réactions d'hydrodésulfuration, d'hydrodéazotation, d'hydrocraquage pour atteindre des conversions poussées (pour obtenir un produit contenant par exemple 30 ppm (parties par million) de soufre ou moins) il est nécessaire d'avoir une bonne distribution du gaz et du liquide mais principalement du liquide sachant que l'on se situe avec des rapports volumétriques qui varient en général d'environ 3 : 1 à environ 400 : 1 et le plus souvent d'environ 10 : 1 à environ 200 : I et dans le cas de l'utilisation d'une trempe (Quench) un très bon contact entre le gaz introduit pour effectuer le refroidissement et les fluides du procédé mis en oeuvre souvent dénommés fluides process.

Compte tenu de la faible proportion de liquide par rapport au gaz, une des possibilités utilisée dans l'art antérieur consiste par exemple à utiliser des plateaux distributeurs comportant une pluralité de trous dédiés au passage du liquide et une pluralité de cheminées dédiées au passage du gaz. On trouvera par exemple des descriptions de tels dispositifs dans les brevets US 3,353,924, US 4,385,033, US 3,855,068.

Ces solutions posent cependant des problèmes en termes de souplesse d'utilisation des plateaux, et peuvent également conduire à des irrégularités d'alimentation des différents orifices en cas de non-horizontalité parfaite des plateaux et/ou des remous suscités par la chute massive des flux liquide et gazeux sur les plateaux.

Pour pallier ces inconvénients, l'homme de l'art est conduit à utiliser un agencement spécifique de plusieurs plateaux dont le dernier est soit pourvu de moyens de collecte et de distribution des phases liquide et gazeuse sous forme séparée tel que décrit par exemple dans le brevet US 5,232,283 ou soit sous forme de mélange tel que décrit par exemple dans les brevets US 4,126,539, US 4,126,540, US 4,836,989, US 5,462,719.

L'inconvénient majeur de ces systèmes provient du fait que compte tenu de la faible quantité de liquide par rapport au gaz, l'homme de l'art est conduit pour tenter d'arroser correctement toute la surface dudit lit de solides granulaires à utiliser une densité de cheminées importante souvent supérieure à 80 cheminées au mètre carré tel que mentionné dans le brevet FR 2,745,202. La vitesse du gaz dans les cheminées varie généralement de 0.5 à 5 centimètres par seconde (cm/s) et la vitesse du liquide varie généralement de 0.05 à 1 cm/s. Ces vitesses sont cependant trop faibles pour permettre à la fois le mélange et la dispersion.

Du fait de cette absence de dispersion du liquide en sortie des cheminées l'homme de l'art est souvent contraint à installer des systèmes type plaque de déflection en sortie d'orifices ou de cheminées comme cela est par exemple décrit dans les documents de brevets FR 2,654,952, WO9746303 et US 5,799,877. Tous les systèmes type brise-jet décrits dans l'art antérieur sont associés à un trou et/ou une cheminée. Leur forme est soit de type plaque d'impact pleine tel que décrit dans les brevets US 5,799,877, FR 2,654,952 et US 4,140,625 en aval d'un venturi, soit celle d'un réceptacle avec cloisons de très faible hauteur tel que décrit dans le brevet WO 9746303. Les inconvénients de ce type de système proviennent du fait que le brise-jet ne couvre pas toute la surface du réacteur et que la partie de solides granulaires situés en dessous dudit système de brise-jet aura très peu de chance d'être arrosée par du liquide.

L'art antérieur peut être illustré par les brevets US 3,524,731 et US 3,431,084 et par le brevet US 3.824,080, qui décrit un système de mélange d'une phase gaz et d'une phase liquide présentant un plateau collecteur de la phase liquide, qui les fait converger vers une zone centrale de mélange dans laquelle la phase liquide va entrer en collision avec la phase vapeur. Aucun de ces brevets n'enseigne ou ne suggère un système dispersif permettant une totale utilisation du lit de solides.

Il a maintenant été découvert, qu'il est possible d'obtenir un arrosage plus efficace et donc une meilleure utilisation du lit de solides granulaires en diminuant la densité de cheminées ou canaux mélangeurs au mètre carré et en équipant le plateau distributeur et/ ou les cheminées ou canaux mélangeurs d'un système dispersif poreux ou brise-jet à porosité contrôlée permettant de disperser le jet liquide en sortie de cheminée.

Dans le dispositif selon l'invention, le nombre de canaux mélangeurs est choisi notamment pour augmenter la vitesse de passage des différentes phases constituant un mélange et obtenir ainsi, une énergie suffisante pour rendre efficace le système dispersif, pour avoir un meilleur contact du mélange résultant avec le lit catalytique, ainsi qu'une meilleure homogénéité du régime d'écoulement du mélange polyphasique.

Avantageusement, en choisissant la distance séparant le plateau distributeur et le système dispersif et la distance entre le système dispersif et le lit de solides granulaires, on peut améliorer encore cette distribution, et en évitant notamment la séparation ou sous-division du mélange formé à l'intérieur des cheminées lors de sa traversée de l'espace séparant le plateau distributeur et le système dispersif et lors de sa traversée de l'espace séparant le système dispersif et le lit catalytique.

La présente invention concerne un dispositif pour mettre en contact et distribuer un mélange comportant au moins une phase gazeuse et au moins une phase liquide pour une enceinte contenant au moins un lit de solides granulaires, lesdites phases étant en écoulement globalement descendant à travers ledit lit de solides granulaires.

Dans sa forme la plus large, le dispositif de l'invention est décrit dans le libellé de la revendication 1 et se définit comme un dispositif pour distribuer un mélange polyphasique comportant au moins une phase gazeuse et au moins une phase liquide, ledit mélange étant en écoulement descendant à travers au moins un lit de solides granulaires, comportant :

- au moins un plateau (P) situé au-dessus d'un desdits lits de solides granulaires,

- plusieurs canaux mélangeurs (21) desdites phases liquide et gazeuse dudit mélange, chacun desdits canaux comportant au moins une section de passage supérieure (22) et au moins une section de passage inférieure (23) permettant la communication du mélange formé à l'intérieur desdits canaux mélangeurs avec un lit de solides granulaires, lesdits canaux mélangeurs étant pourvus sur au moins une partie de leur hauteur d'une ou de plusieurs sections de passage latérales (26),

- ladite section de passage supérieure (22) laissant passer la majorité de la phase gazeuse dudit mélange et lesdites sections de passage latérales (26) permettant respectivement le passage de la phase liquide à l'intérieur desdits canaux mélangeurs et/ou d'au moins une partie de la phase gazeuse, ledit dispositif comprenant en dessous dudit plateau (P) et en dessous de ladite section de passage inférieure (23) et au-dessus dudit lit de solides au moins un système dispersif type brise-jet (28) ayant une porosité contrôlée.

D'autres caractéristiques techniques optionelles sont contenues dans les libellés des revendications dependentes 2 à 14. La revendication 15 concerne l'utilisation. Selon une mise en oeuvre particulière, le système dispersif type brise-jet (28) est caractérisé par le fait que la surface de vide rapportée à la surface totale (porosité) varie dans un rapport d'environ 2 à environ 80 %, de préférence d'environ 5 à environ 50 % et le plus souvent d'environ 5 à environ 30 %.

On choisira les gammes de porosité du système dispersif en fonction des vitesses superficielles du gaz et du liquide, de la masse volumique du gaz et du liquide, des viscosités du gaz et du liquide et de la tension superficielle en relation avec la nature de la surface du système dispersif.

Selon une réalisation particulière le dispositif selon l'invention est un dispositif dans lequel on associe un système dispersif type brise-jet à chaque canal mélangeur Selon une autre réalisation particulière, le dispositif selon l'invention est un dispositif dans lequel on associe un système dispersif type brise-jet à plusieurs canaux mélangeurs voisins les uns des autres.

Selon une autre réalisation particulière, le dispositif selon l'invention est un dispositif dans lequel on associe un système dispersif type brise-jet à l'ensemble des canaux mélangeurs du dispositif.

Selon une forme particulière de réalisation, le dispositif dispersif de type brise-jet selon l'invention est associé par au moins un élément de liaison à au moins un plateau (P) ou à au moins une poutre de support dudit plateau (P).

Selon une autre forme particulière de réalisation, les systèmes dispersifs peuvent se trouver sur un même plan.

Il peuvent aussi, selon une autre variante, être disposés selon au moins deux niveaux différents, de manière que, de façon préférée, la projection sur une section du réacteur des systèmes dispersifs appartenant à des niveaux différents ne fasse pas apparaître de zone de recouvrement et couvre sensiblement l'ensemble de la section du réacteur.

La distance séparant deux niveaux différents est généralement comprise entre 1 et 250 mm, de préférence 5 et 180 mm et plus particulièrement entre 10 et 80 mm.

Les distances entre deux niveaux successifs sont de préférence sensiblement les mêmes.

Cette disposition des systèmes dispersifs permet un meilleur écoulement du gaz, en cas de débit fluctuant de ce dernier pouvant conduire à un excédent momentané de gaz.

Selon une autre caractéristiques, lesdits systèmes dispersifs type brise-jet peuvent être situés à des distances différentes les uns des autres par rapport à au moins un plateau (P) ou à au moins une poutre de support dudit plateau (P) auxquels ils sont associés par au moins un élément de liaison.

Selon une autre forme particulière de réalisation du dispositif dispersif de type brise-jet selon l'invention, au moins deux systèmes dispersifs type brise jet situés à des distances différentes sont reliés entre eux par au moins un élément de liaison et le ou les systèmes dispersifs situés à la plus petite distance d'au moins un plateau (P) ou d'au moins une poutre de support dudit plateau (P) sont reliés audit plateau (P) ou à la dite poutre de support par au moins un élément de liaison.

Dans le dispositif de l'invention, la densité des canaux mélangeurs est le plus souvent faible, par exemple d'environ de 1 à 80 canaux par mètre carré, de préférence 5 à 50 canaux par mètre carré. Les canaux mélangeurs, de forme tubulaire, présentent en général une section de passage des fluides sensiblement constante à l'intérieur de ces canaux. Ils sont, de préférence, sensiblement cylindriques. Le canal mélangeur possède habituellement un diamètre compris dans l'intervalle [0,3 ; 10 cm] et de préférence [0,3 ; 5 cm] et souvent par exemple dans l'intervalle [1 ; 5 cm].

L'invention peut aussi concerner des canaux mélangeurs ayant une forme de venturi, les sections latérales de passage du liquide à l'intérieur de ces canaux se trouvant au-dessus du col du venturi.

Le plateau peut aussi comporter des orifices de drainage de la phase liquide. Dans ce cas la surface totale résultante de la somme des surfaces de passage de chacun des orifices est telle que le débit de la phase liquide à travers les orifices de drainage soit inférieur à 10 % de la fraction de la phase liquide en cours de fonctionnement et de préférence inférieur à 5%.

Par rapport aux dispositifs décrits dans l'art antérieur, le dispositif de la présente invention offre les avantages suivants :

- en diminuant le nombre de canaux mélangeurs on augmente les vitesses gaz et liquide du mélange à l'intérieur du canal mélangeur et donc on favorise le mélange et le contact entre les phases,

- en ajoutant un système dispersif couvrant la quasi-totalité du réacteur on assure une utilisation optimum du lit de solides granulaires,

- en ayant un nombre de canaux mélangeurs faible on peut faire un plateau auto supporté et donc minimiser le volume du dispositif et minimiser les obstacles rencontrés par le fluide,

- le dispositif est simple et robuste (un seul plateau contrairement aux dispositifs de l'art antérieur et par exemple à celui décrit dans le brevet US 4,126,540).

D'autres avantages et caractéristiques de l'invention apparaîtront mieux à la lecture de la description donnée ci-après à titre d'exemples de réalisation.

La figure 1 montre schématiquement un réacteur comportant plusieurs plateaux distributeur (P), un plateau distributeur (P) étant situé en tête de réacteur et un autre après un premier lit de solides granulaires et avant un deuxième lit de solides granulaires.

La figure 2 montre schématiquement un plateau de distribution pourvu de canaux mélangeurs (21).

Les figures 3 et 4 montrent des exemples de géométries de canaux mélangeurs (21) équipant les plateaux distributeurs.

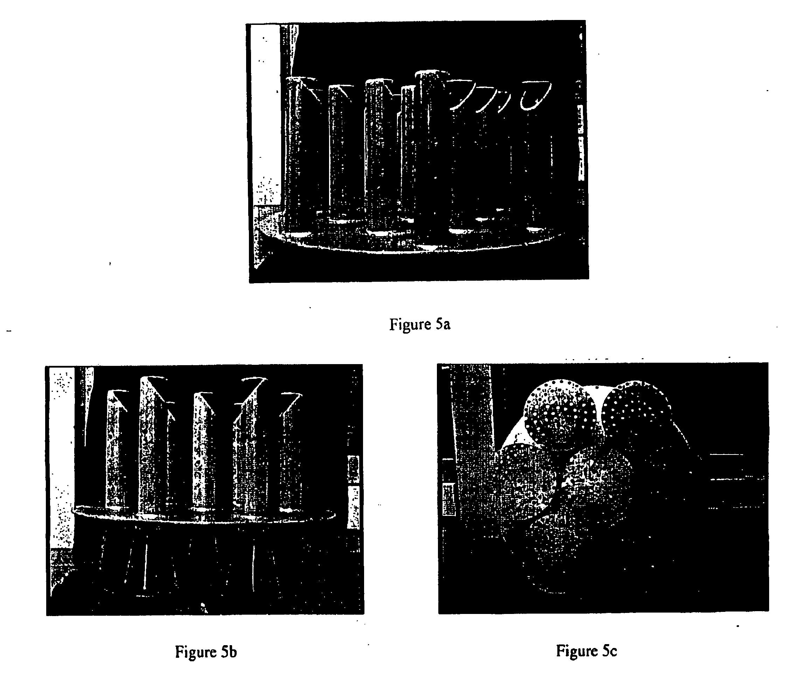

Les figures 5a, 5b et 5c montrent respectivement un exemple de réalisation de plateau avec un dispositif selon l'art antérieur (figure 5a) et un exemple de réalisation de plateau avec un dispositif dispersif sous chaque cheminée vue de coté (figure 5b) et vue d'en dessous (figure 5c).

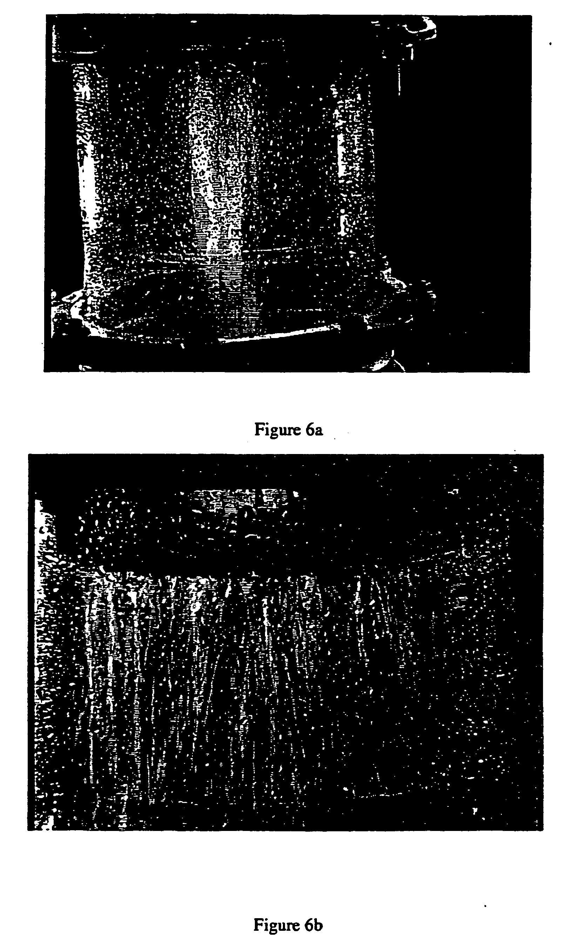

La figure 6a est une photo prise lors de la réalisation d'essais sur une maquette comportant en dessous du dispositif de distribution de l'art antérieur une partie transparente telle qu'en plexiglas (marque déposée) montrant la faible dispersion obtenu par l'utilisation d'un tel dispositif.

La figure 6b est une photo prise lors de la réalisation d'essais sur une maquette comportant en dessous du dispositif de distribution une partie transparente en plexiglas (marque déposée). Sur cette photo le dispositif utilisé est conforme à celui de l'invention et comporte un système dispersif type brise-jet en dessous du canal mélangeur. On remarque la nette amélioration de la dispersion (répartition du liquide) obtenue par rapport aux essais réalisé avec un dispositif selon l'art antérieur (figure 6a).

De manière à mieux comprendre l'invention, la description donnée ci-après à titre d'exemple d'application concerne un système de distribution utilisé dans un réacteur adapté pour les hydrotraitements. Ce dispositif peut, sans sortir du cadre de l'invention, être utilisé dans tout dispositif et dans tout domaine où il est souhaitable d'obtenir une bonne distribution d'un fluide polyphasique. Une application du dispositif selon l'invention est en particulier son utilisation pour la distribution d'un mélange polyphasique comportant au moins une phase gazeuse comprenant au moins en partie de l'hydrogène.

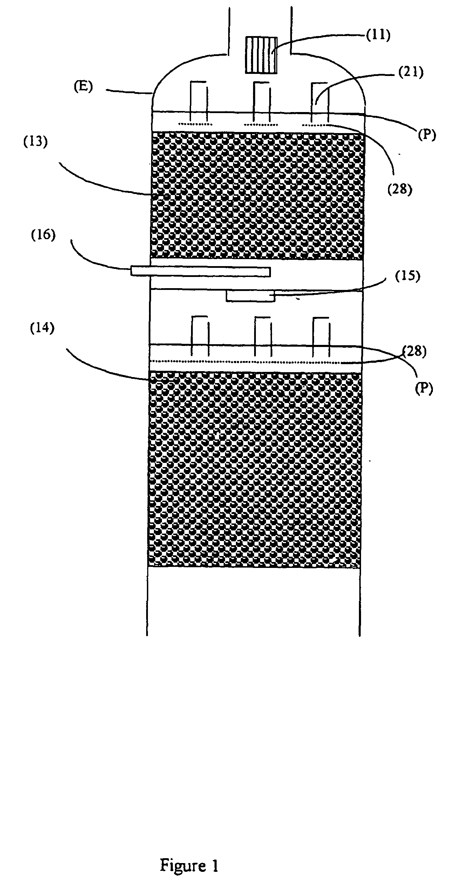

Le réacteur dont la partie supérieure est schématisée sur la figure 1 comporte une enceinte (E) comportant dans sa partie supérieure ou tête de réacteur, un prédistributeur (11). Le mélange distribué par le dispositif (11) s'écoule de manière descendante jusqu'au plateau distributeur (P) qui est situé au-dessus et à une distance D d'un premier lit de solides granulaires (13) ou lit catalytique. Le plateau comporte une pluralité de canaux mélangeurs (21) débouchant sur un système dispersif type brise-jet (28). Cette distance D peut être minimisée pour gagner de la place dans le réacteur et conserver la qualité de la distribution réalisée en sortie du dispositif de la présente invention. Le mélange biphasique après son passage au travers du lit de solides granulaires (13) peut, soit être redistribué directement sur un second lit de solides granulaires (14) après être passé par le dispositif de la présente invention, soit comme cela est schématisé sur cette figure 1 après être passé au préalable dans une boîte de mélange (15) après l'introduction d'un fluide de trempe (Quench) par la ligne (16).

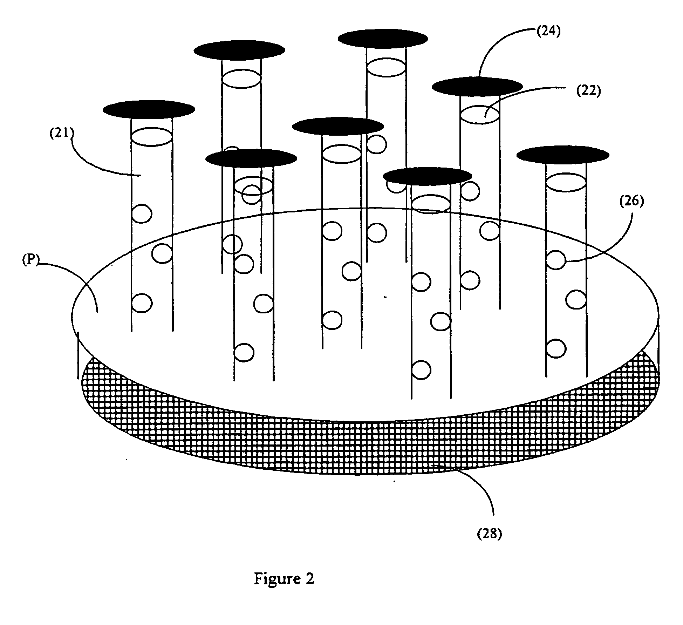

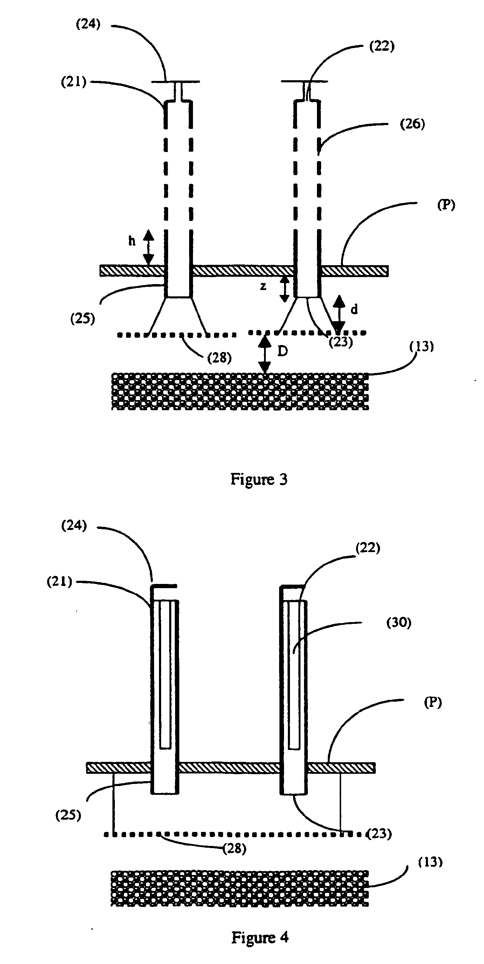

Un dispositif selon la présente invention est schématisé par une vue en perspective sur la figure 2. Il comporte (figure 2, 3 et 4) une pluralité de canaux mélangeurs tels que des cheminées (21) ayant au moins une section de passage supérieure (22) par exemple un orifice au niveau de sa partie supérieure et une section de passage inférieure (23) (visible sur les figures 3 et 4). Les cheminées sont surmontées en leur partie supérieure de chapeaux (24) (brise-jet) destinés à briser les jets provenant soit de la canalisation d'entrée soit du lit de solides granulaire supérieur et à permettre la séparation du gaz et du liquide. Ces cheminées comportent une pluralité de trous (26) permettant le passage du liquide. En dessous du plateau (P) un système dispersif type brise-jet (28) reçoit le mélange biphasique formé dans les canaux (21).

La hauteur des cheminées ou canaux mélangeurs est le plus souvent comprise entre 100 et 500 millimètres (mm) de préférence entre 250 et 400 mm.

Les tubes des canaux mélangeurs dépassent de la base (25) de la base du plateau (P) d'une hauteur « z » qui varie habituellement entre 10 et 200 et souvent entre 25 et 50 mm. Le plus souvent le canal mélangeur se prolonge en dessous du plateau distributeur sur une longueur « z » et la valeur de « z » est inférieure ou égale à « d » qui est la distance entre la sortie (23) d'un canal mélangeur et le système dispersif type brise-jet (28).

Les canaux mélangeurs (21) sont percés de trous (26) en leur périphérie sur un ou plusieurs niveaux de préférence au moins trois niveaux. On respecte de préférence une hauteur minimale « h » entre la face supérieure du plateau (P) (la face qui reçoit le liquide) et les orifices ou trous situés dans la partie inférieure du canal ou, dans le cas d'une fente, le bas de la fente, se trouvent au-dessus de la hauteur « h ». Cette hauteur h est souvent comprise entre 5 mm et 250 mm de préférence entre 50 mm et 100 mm.

Le moyen d'assurer la dispersion du mélange biphasique ou polyphasique formé dans le canal mélangeur est un brise-jet (28) à porosité contrôlée dépendante des flux gazeux et liquide (réalisation de l'arrosage de la surface sous forme de spray) situé en dessous et à proximité de la section de passage (23). La distance « d » entre la sortie (23) du canal mélangeur et le brise-jet (28) varie le plus souvent de 5 à 500 mm souvent de 10 à 200 mm et de préférence de 50 à 100 mm. Le brise-jet (28) est situé à une distance « D » du lit de solides granulaires (13). Cette distance « D » entre le système dispersif type brise-jet et le lit de solide granulaire est choisie pour conserver le mélange formé à l'intérieur desdits canaux mélangeurs et sortant desdits canaux mélangeurs par lesdites sections de passage inférieures, jusqu'à sa distribution dans le lit de solides granulaires Cette distance « D » est habituellement d'environ 0 à 500 mm, souvent d'environ 0 à 100 mm et le plus souvent d'environ 1 à environ 50 mm. Sur la figure 3 chaque canal mélangeur est associé à un brise-jet tandis que dans le dispositif schématisé sur la figure 4 un brise-jet unique est associé à plusieurs canaux mélangeurs. Dans le dispositif schématisé sur la figure 4 chaque canal mélangeur comporte pour le passage du liquide des fentes (30).

**Revendications**

1. Dispositif pour distribuer un mélange polyphasique comportant au moins une phase gazeuse et au moins une phase liquide, ledit mélange étant en écoulement descendant à travers au moins un lit de solides granulaires, comportant :

   - au moins un plateau (P) situé au-dessus d'un desdits lits de solides granulaires,
   - plusieurs cheminées (21) de mélange desdites phases liquide et gazeuse dudit mélange, chacune desdites cheminées de mélange comportant au moins une section de passage supérieure (22) et au moins une section de passage inférieure (23) permettant la communication du mélange formé à l'intérieur desdites cheminées de mélange avec un lit de solides granulaires, lesdites cheminées de mélange étant pourvues sur au moins une partie de leur hauteur d'une ou de plusieurs sections de passage latérales (26),

- ladite section de passage supérieure (22) laissant passer la majorité de la phase gazeuse dudit mélange et lesdites sections de passage latérales (26) permettant respectivement le passage de la phase liquide à l'intérieur desdites cheminées de mélange et/ou d'au moins une partie de la phase gazeuse, **caractérisé en ce qu'**en dessous dudit plateau (P) et en dessous de la section de passage inférieure (23) et au-dessus du lit de solides granulaires on dispose au moins un système dispersif (28) type brise-jet ayant une porosité contrôlée comprise entre 2% et 80%, disposé à une distance d comprise entre 5 et 500 mm en dessous de ladite section de passage inférieure (23) et à une distance D au dessus dudit lit de solides granulaires qui est inférieure ou égale à 500 mm, d et D étant choisies pour conserver le mélange formé dans lesdites cheminées et sortant de ces cheminées jusqu'à sa distribution dans le lit de solides granulaires.

2. Dispositif selon la revendication 1 dans lequel la densité de cheminées est de 1 à 80 cheminées par mètre carré.

3. Dispositif selon l'une des revendications 1 et 2 dans lequel D est compris entre 1 et 50 mm.

4. Dispositif selon l'une des revendications 1 à 3 dans lequel on associe un système dispersif type brise-jet à chaque canal mélangeur

5. Dispositif selon l'une des revendication 1 à 4 dans lequel on associe un système dispersif type brise-jet à plusieurs cheminées voisines les unes des autres.

6. Dispositif selon l'une des revendications 1 à 5 dans lequel on associe un système dispersif type brise-jet à l'ensemble des cheminées du dispositif.

7. Dispositif selon l'une des revendications 1 à 6 dans lequel le système dispersif de type brise-jet est associé par au moins un élément de liaison à au moins un plateau (P) ou à au moins une poutre de support dudit plateau (P).

8. Dispositif selon l'une des revendications 1 à 7 dans lequel on associe au moins deux systèmes dispersifs type brise-jet à au moins deux cheminées, lesdits systèmes dispersifs type brise-jet étant situés à des distances différentes les uns des autres par rapport au plateau (P) ou à au moins une poutre de support dudit plateau (P), auxquels ils sont associés par au moins un élément de liaison.

9. Dispositif selon la revendication 8 dans lequel au moins deux systèmes dispersifs type brise jet situés à des distances différentes sont reliés entre eux par au moins un élément de liaison et dans lequel le ou les systèmes dispersifs situés à la plus petite distance du plateau (P) ou à au moins une poutre de support dudit plateau (P) sont reliés audit plateau (P) ou à la dite poutre de support par au moins un élément de liaison.

10. Dispositif selon l'une des revendications 1 à 9 **caractérisé en ce qu'**une cheminée se prolonge en dessous du plateau distributeur sur une longueur « z » et la valeur de « z » est inférieure ou égale à « d ».

11. Dispositif selon l'une des revendications de 1 à 10 **caractérisé en ce que** lesdites cheminées ont un diamètre dont la valeur est comprise dans l'intervalle [0,3 ;10 cm] et, de préférence, dans l'intervalle [0,3 ; 5 cm].

12. Dispositif selon l'une des revendications de 1 à 11 **caractérisé en ce que** ledit plateau comporte des orifices de drainage de la phase liquide, la surface totale résultant de la somme des surfaces de passage de chacun des orifices étant telle que le débit de la phase liquide à travers les orifices de drainage soit inférieur à 10 % de la fraction de la phase liquide en cours de fonctionnement et de préférence inférieure à 5%.

13. Dispositif selon l'une des revendications 1 à 12, dans lequel la densité des cheminées est de 5 à 50 par mètre carré.

14. Dispositif selon l'une des revendications 1 à 13, dans lequel la section des cheminées est sensiblement constante.

15. Application du dispositif selon l'une des revendications 1 à 14 à la distribution d'un mélange polyphasique comportant au moins une phase gazeuse comprenant au moins en partie de l'hydrogène.

**Claims**

1. A device for distributing a poly-phase mixture comprising at least one gas phase and at least one liquid phase, said mixture being in downflow mode through at least one bed of granular solid, comprising:

• at least one tray (P) located above one of said beds of granular solid;
• a plurality of mixer downcomers (21) for said liquid and gas phases of said mixture, each of said mixer downcomers comprising at least one upper cross section for flow (22) and at least one lower cross section for flow (23) allowing the mixture formed inside said mixer downcomers to communicate with a bed of granular solid, said mixer downcomers being provided with one or more lateral cross sections for flow (26) over at least a portion of their height;

• said upper cross section for flow (22) allowing the majority of the gas phase of said mixture to pass and said lateral cross sections for flow (26) allowing the passage of the liquid phase into said mixer downcomer and/or at least a portion of the gas phase respectively, **characterized in that** at least one jet disturber type dispersive system (28), located below said tray (P) and below the lower cross section for flow (23) and above the bed of granular solid, have a controlled porosity about 2% to about 80%, disposed at distance "d" about 5 to 500 millimetres below said lower cross section for flow (23) and at distance "D" above said bed of granular solid which is less than or equal to 500 millimetres, "d" and "D" are selected so that the mixture formed inside said mixer downcomer and leaving said mixer downcomer is preserved until it is distributed onto the bed of granular solid .

2. A device according to claim 1, in which the density of the mixer downcomers is in the range from 1 to 80 conduits per m$^2$

3. A device according to claim 1 or claim 2, in which "D" is about 1 to 50 millimetres.

4. A device according to any one of claims 1 to 3, in which an jet disturber type dispersive system is associated with each mixer downcomer.

5. A device according to any one of claims 1 to 4, in which an jet disturber type dispersive system is associated with a plurality of neighbouring mixer downcomers.

6. A device according to any one of claims 1 to 5, in which an jet disturber type dispersive system is associated with all of the mixer downcomers of the device.

7. A device according to any one of claims 1 to 6, in which the jet disturber type dispersive device is associated with at least one element for connection to at least one tray (P) or to at least one support beam for said tray (P).

8. A device according to any one of claims 1 to 7, in which at least two jet disturber type dispersive devices are associated with at least two mixer downcomers, said jet disturber type dispersive devices being located at different distances with respect to the tray (P) or to at least one support beam of said tray (P) to which they are connected by at least one connection element.

9. Devices according to claim 8, in which at least two jet disturber type dispersive devices located at different distances are connected together by at least one connection element and in which the dispersive systems located at the shortest distance from said tray (P) or at least one support beam for said tray (P) are connected to said tray (P) or said support beam by at least one connection element.

10. A device according to any one of claims 1 to 9, **characterized in that** a mixer downcomer extends below a distributor tray over a height "z" and the value of "z" is less than or equal to that of "d".

11. A device according to any one of claims 1 to 10, **characterized in that** the diameter of said mixer downcomers is in the interval [0.3; 10 cm], preferably in the interval [0.3; 5 cm].

12. A device according to any one of claims 1 to 11, **characterized in that** said tray comprises orifices for draining the liquid phase, the total surface area resulting from the sum of the surface areas for flow of each of the orifices being such that the flow rate of the liquid phase through the drainage orifices is less than 10% of that of the liquid phase fraction during operation, preferably less than 5%.

13. A device according to any one of claims 1 to 12, **characterized in that** the density of the mixer downcomers is in the range from 5 to 50 conduits per m$^2$.

14. A device according to any one of claims 1 to 13, **characterized in that** the cross section of the mixer downcomers is approximatively constant.

15. Application of a device according to any one of claims 1 to 14 to the distribution of a poly-phase mixture comprising at least one gas phase at least partially constituted by hydrogen.

**Patentansprüche**

1. Vorrichtung zum Verteilen eines mehrphasigen Gemischs, das mindestens eine gasförmige Phase und mindestens eine flüssige Phase umfasst, wobei das Gemisch abwärtsströmend durch mindestens ein körniges Festkörperbett läuft, umfassend:

- mindestens eine Schale (P), die oberhalb einer der körnigen Festkörperbetten liegt,
- mehrere Schächte (21) zum Mischen der flüssigen und gasförmigen Phasen des Gemischs, wobei jeder der Mischerschächte mindestens einen oberen Strömungsquerschnitt (22) und mindestens einen unteren Strömungsquerschnitt (23) umfasst, die die Kommunikation des Gemischs, das sich im Innern der Mischerschächte gebildet hat, mit einem körnigen Festkörperbett ermöglichen, wobei die Mischerschächte auf mindestens einem Teil ihrer Höhe mit einer oder mehreren seitlichen Strömungsquerschnitten (26) versehen sind,

- wobei der obere Strömungsquerschnitt (22) den Großteil der gasförmigen Phase des Gemischs durchströmen lässt und die seitlichen Strömungsquerschnitte (26) jeweils das Durchströmen der flüssigen Phase im Innern der Mischerschächte und/oder mindestens eines Teils der gasförmigen Phase ermöglichen, **dadurch gekennzeichnet, dass** unterhalb der Schale (P) und unterhalb des unteren Strömungsquerschnitts (23) und oberhalb des körniges Festkörperbettes mindestens ein dispergierendes System (28) vom Typ Strahlstörer angebracht ist, das eine kontrollierte Porosität im Bereich zwischen 2 % und 80 % hat, das mit einem Abstand d im Bereich zwischen 5 und 500 mm unterhalb des unteren Strömungsquerschnitts (23) und mit einem Abstand D oberhalb der Schüttschicht, der kleiner oder gleich 500 mm ist, angebracht ist, wobei d und D ausgewählt sind, um das Gemisch, das sich in den Schächten gebildet hat und aus diesen Schächten austritt bis zu dessen Verteilung in dem körnigen Festkörperbett zu erhalten.

2. Vorrichtung nach Anspruch 1, wobei die Dichte der Schächte 1 bis 80 Schächte pro Quadratmeter beträgt.

3. Vorrichtung nach einem der Ansprüche 1 und 2, wobei D im Bereich zwischen 1 und 50 mm liegt.

4. Vorrichtung nach einem der Ansprüche 1 bis 3, wobei ein dispergierendes System vom Typ Strahlstörer mit jedem Mischerkanal assoziiert wird.

5. Vorrichtung nach einem der Ansprüche 1 bis 4, wobei ein dispergierendes System vom Typ Strahlstörer mit mehreren untereinander benachbarten Schächten assoziiert wird.

6. Vorrichtung nach einem der Ansprüche 1 bis 5, wobei ein dispergierendes System vom Typ Strahlstörer mit der Gesamtheit der Schächte der Vorrichtung assoziiert wird.

7. Vorrichtung nach einem der Ansprüche 1 bis 6, wobei das dispergierende System vom Typ Strahlstörer mit mindestens einem Verbindungselement zu mindestens einer Schale (P) oder mit mindestens einem Tragelement der Schale (P) assoziiert ist.

8. Vorrichtung nach einem der Ansprüche 1 bis 7, wobei mindestens zwei dispergierende Systeme vom Typ Strahlstörer mit mindestens zwei Schächten werden, wobei die dispergierenden Systeme vom Typ Strahlstörer mit unterschiedlichen Abständen voneinander angeordnet sind, bezogen auf die Schale (P) oder auf mindestens ein Tragelement der Schale (P), mit denen sie durch mindestens ein Verbindungselement assoziiert sind.

9. Vorrichtung nach Anspruch 8, wobei mindestens zwei dispergierende Systeme vom Typ Strahlstörer, die mit unterschiedlichen Abständen angeordnet sind, untereinander mit mindestens einem Verbindungselement verbunden sind und wobei das oder die dispergierenden Systeme, die mit dem geringsten Abstand zur Schale (P) oder zu mindestens einem Tragelement der Schale (P) angeordnet sind, mit der Schale (P) oder mit dem Tragelement durch mindestens ein Verbindungselement verbunden sind.

10. Vorrichtung nach einem der Ansprüche 1 bis 9, **dadurch gekennzeichnet, dass** sich ein Schacht unterhalb der Verteilerschale über eine Länge « z » verlängert und der Wert von « z » kleiner oder gleich « d » ist.

11. Vorrichtung nach einem der Ansprüche 1 bis 10, **dadurch gekennzeichnet, dass** die Schächte einen Durchmesser haben, dessen Wert im Bereich zwischen dem Intervall [0,3; 10 cm] und bevorzugt dem Intervall [0,3; 5 cm] liegen.

12. Vorrichtung nach einem der Ansprüche 1 bis 11, **dadurch gekennzeichnet, dass** die Schale Ablauföffnungen für die flüssige Phase umfasst, wobei die resultierende Gesamtoberfläche der Summe der Strömungsoberflächen jeder der Öffnungen so ist, dass die Durchflussmenge der flüssigen Phase durch die Ablauföffnungen weniger als 10 % der Fraktion der flüssigen Phase während des Betriebs und bevorzugt weniger als 5 % darstellt.

13. Vorrichtung nach einem der Ansprüche 1 bis 12, wobei die Dichte der Schächte 5 bis 50 Schächte pro Quadratmeter beträgt.

14. Vorrichtung nach einem der Ansprüche 1 bis 13, wobei der Querschnitt der Schächte im Wesentlichen konstant ist.

15. Anwendung der Vorrichtung nach einem der Ansprüche 1 bis 14 zur Verteilung eines mehrphasigen Gemischs, das mindestens eine gasförmige Phase umfasst, die mindestens teilweise Wasserstoff enthält.

Figure 1

Figure 2

(24)

(22)

(21)

(26)

(P)

h

z

d

(25)

(28)

(23)

D

(13)

Figure 3

(24)

(22)

(21)

(30)

(P)

(25)

(28)

(23)

(13)

Figure 4

Figure 5a

Figure 5b

Figure 5c

Figure 6a

Figure 6b

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 3353924 A
- US 4385033 A
- US 3855068 A
- US 5232283 A
- US 4126539 A
- US 4126540 A
- US 4836989 A
- US 5462719 A

- FR 2745202
- FR 2654952
- WO 9746303 A
- US 5799877 A
- US 4140625 A
- US 3524731 A
- US 3431084 A
- US 3824080 A